# EUROPEAN PATENT SPECIFICATION

(11) **EP 1 322 885 B1**
(45) Date of publication and mention of the grant of the patent: **22.06.2005**
(21) Application number: 01974451.5
(22) Date of filing: 04.10.2001
(51) Int. Cl.: F16L 37/092, F16L 37/22, F16L 37/23

(54) **A DEVICE FOR GRIPPING A PIPE OR BAR**
VORRICHTUNG ZUM GREIFEN EINES ROHRES ODER EINER STANGE
DISPOSITIF DE RETENUE DE TUYAU OU DE BARRE

(30) Priority: 04.10.2000 GB 0024278
(43) Date of publication of application: 02.07.2003
(73) Proprietor: BSW Limited, Lancaster LA1 4YR (GB)
(72) Inventor: WALMSLEY, Owen, Roy Bridge, Invernesshire PH31 4AS (GB); EMMETT, Robert, Wray, Near Lancaster LA2 8RG (GB)
(74) Representative: Ajello, Michael John
(86) International application number: PCT/GB2001/004411
(87) International publication number: WO 2002/029301

(56) References cited:
- EP-A- 0 735 306
- DE-U- 29 704 444
- US-A- 1 337 288
- US-A- 2 702 202

## Description

THIS INVENTION concerns a device for gripping the external wall surface of a pipe or bar and particularly, though not exclusively, to a connector adapted to receive and retain a pipe end for fluid connection to another pipe end or to a supply outlet.

Devices such as described and illustrated in US-A-1337288 are known for gripping the external wall surface of a pipe, which include a body having an internal tapered wall part, and a cage with balls or rollers cooperating with the tapered wall part thus to move inwardly and grip the pipe wall to prevent its removal from the device. In such devices the cage is spring-loaded in a direction to cause the balls or rollers to grip the wall but in many such examples when fluid pressure is applied within the device there is a tendency for the pipe to slip and move longitudinally by as much as 5mm or more. This movement causes the balls or rollers to become partially embedded in the pipe wall, which makes it difficult subsequently to remove the pipe from the device and it is often a disadvantage that the external wall of the pipe is partially deformed or scored by the balls or rollers.

An object of the present invention is to provide a gripping device such as a pipe connector wherein the aforementioned disadvantage is substantially avoided.

According to the present invention there is provided a device for gripping the external wall surface of a pipe or bar, comprising a tubular body having at least one end open for insertion of a pipe or bar, a cage within the tubular body with balls or rollers cooperating with a first tapered internal wall part of the body, and resilient means to push the cage in an axial direction to cause the balls or rollers to grip the external wall surface of an inserted pipe or bar; characterised by a compressible member located within the body and cooperating with a second tapered internal wall part of the body and movable relative thereto when increased fluid pressure is present within the body thus also to grip the external wall surface of the inserted pipe or bar.

Preferably the compressible member has a contact surface adapted to make substantially full circumferential contact with the external wall surface of the inserted pipe or bar.

The device may include a sealing ring adapted to form a seal between the internal wall of the body and the external wall surface of the inserted pipe or bar.

The cage and the compressible member may have respective cooperating faces for simultaneous axial movement within the body.

The compressible member may be a circumferentially split ferrule.

The body may comprise axially aligned separate body parts each threadedly engageable with a co-axial spring retaining member housed within the body.

The body may contain an anti-extrusion ring axially aligned with the circumferentially split ferrule, and a tapered ring located between the anti-extrusion ring and the circumferentially split ferrule.

The body may include an annular shoulder against wh ich an end of the inserted pipe or bar may be located.

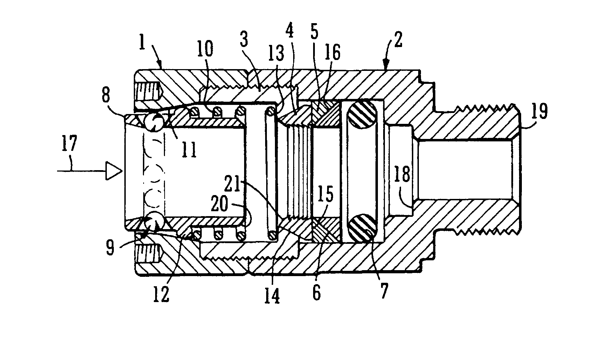

An embodiment of the invention will now be described, by way of example only, with reference to the accompanying drawing which is a cross-section through a pipe connector made in accordance with the invention.

The connector comprises a first tubular body part 1 having a first tapered internal wall part 11. Threadedly engaged within one end of the body part 1 is a spring retaining member 3. An external thread of the retaining member 3 receives a second tubular body part 2.

A ball cage 8 is located co-axially within the body part 1 and includes an outwardly directed circumferential flange 12 which, together with an inwardly directed flange 13 on the spring retaining member 3, retains a coil spring 10 whereby the cage 8 is pushed in an axial direction to cause a number of ball bearings 9 to ride radially inwardly on the first tapered internal wall part 11. The cage is retained within the body part 1 by engagement of the flange 12 with the wall part 11.

The flange 13 of the spring retaining member 3 has a tapered internal face 14 against which is located a corresponding tapered external face of a circumferentially split ferrule 4 located within the body part 2 co-axially therewith.

Abutting an end face 15 of the ferrule 4 axially remote from the cage 8 is a metal ring 5 having a tapered face 16 against which is located a corresponding tapered face of an anti-extrusion ring 6 preferably, though not exclusively, of PTFE.

Axially displaced from the anti-extrusion ring 6 is an 'O' ring 7 which in use forms a pressure tight seal between the internal wall of the body part 2 and a pipe to be inserted into the connector as will be described.

It can be seen that the body part 1, ball cage 8, spring retainer 3 and spring 10 may be pre-assembled, as can the body part 2, the 'O' ring 7, the rings 5 and 6 and the split ferrule 4, whereupon joining of the two body parts forms the final assembly.

The materials from which the parts of the device are constructed are typical of such devices. For example, the body parts 1 and 2 may be of steel or brass; the spring-retainer 3 may be of steel; the ball bearings 9 may be of hardened steel, the split ferrule 4 may be of hardened steel segments with elastomeric inserts, the 'O' ring 7 may be of natural or synthetic rubber; and the ring 5 may be of brass.

Typically, a connecting device as described may be used in conjunction with pipes of a diameter up to 50mm with internal pressures in the region of 207 to 474 bar (3,000 to 6,000 psi), but is typically tested to a pressure in excess of 1379 bar (20,000 psi).

The connector is used by inserting a pipe end in the direction of arrow 17 which causes the ball cage 8 to move against the spring 10 such that the ball bearings 9 ride along the external wall of the inserted pipe. An annular shoulder 18 preferably, though not essentially, forms an end stop for the pipe whereupon the pipe is retained by the pressure of spring 10 acting to cause ball bearings 9 to form a grip upon the external wall of the inserted pipe but with insufficient pressure to become embedded therein.

In the present example the body part 2 has an end portion 19 which may be connected to another such connecting device or to a port for the transportation of pressurised fluid.

When the fluid pressure increases within the body part 2 the 'O' ring 7 is forced against rings 6 and 5, thus in turn causing the split ferrule 4 to ride inwardly on the tapered internal face 14 of the spring retaining member 3 to be compressed thereby and firmly to grip the external wall of the pipe substantially around the full circumference thereof. This gripping action serves to prevent any tendency of the pipe, under pressure, to move in a direction opposite to arrow 17 which would otherwise cause the ball bearings 9 to become embedded in the pipe wall. In a typical conventional pipe connector having only a ball or roller cage, such movement may be as great as 5mm in the axial direction whereas with the present arrangement any such movement is expected to be negligible and certainly no greater than 1mm. This is of considerable advantage when constructing, for example, hydraulic circuits.

Since the balls 9 are prevented from excessively gripping and thus deforming the pipe wall, subsequent removal of the pipe from the connector is facilitated by introducing a removal tool which pushes the cage 8 against the spring 10, and it will be seen that the cage 8 and split ferrule 4 have cooperating tapered end faces 20 and 21 respectively, such that the removal tool causes the cage to abut the ferrule and move it in the direction of arrow 17 thus to expand and release the pipe.

It will be appreciated that the circumferentially split ferrule 4 is clear of the ipe during initial insertion and only grips the external wall thereof when compressed by the tapered face 14 upon the application of an increased fluid pressure within the device.

A further advantage of the present device is that it is the internal fluid pressure which provides the gripping action and no additional tools or the like are needed for tightening the device, unlike some types of pipe connector where relative rotation of the parts is needed to grip the pipe. The device is thus self-gripping with minimal linear slip of the pipe in use and considerably reduced deformation or surface damage to the pipe wall in view of the substantially full circumferential contact between the latter and the split ferrule.

In use, any further increase in internal fluid pressure serves only to cause the split ferrule 4 to grip the pipe more firmly.

Although the ferrule 4 is illustrated as having an internal toothed gripping surface, in some cases a smooth internal surface is sufficient.

Since the ball bearings do not excessively grip the pipe wall the connector is re-usable with, perhaps, the split ferrule 4 being the only part requiring replacement in some cases.

Although the foregoing description refers to the device as a pipe connector nevertheless, with a different formation of body part 2 it may serve as a pipe or bar retaining device, pressurised fluid being introduced into the body part 2 such as to force the 'O' ring 7 and the rings 6 and 5 towards the split ferrule 4. The pressurised fluid may be introduced through a port in the wall of the body part 2 or, in the case of a pressurised pipe, by way of an aperture in the pipe wall.

## Claims

1. A device for gripping the external wall surface of a pipe or bar, comprising a tubular body (1,2) having at least one end open for insertion of a pipe or bar, a cage (8) with balls (9) or rollers cooperating with a first tapered internal wall part (11) of the body, and resilient means (10) ,preferably a spring (10), to push the cage (8) in an axial direction to cause the balls (9) or rollers to grip the external wall of an inserted pipe or bar; **characterized by** a compressible member (4) located within the body (1,2) and cooperating with a second tapered internal wall part (14) of the body or of a coaxial spring retaining member (3) housed within the body (1,2) and movable relative thereto when increased fluid pressure is present within the body thus also to grip the external wall of the inserted pipe or bar.

2. A device according to Claim 1, wherein the compressible member (4) has a contact surface adapted to make substantially full circumferential contact with the external wall surface of the inserted pipe or bar.

3. A device according to Claim 1 or Claim 2, including a sealing ring (7) adapted to form a seal between the internal wall of the body (1,2) and the external wall surface of the inserted pipe or bar.

4. A device according to any preceding claim, wherein the cage (8) and the compressible member (4) have respective co-operating faces (20,21) for simultaneous axial movement within the body.

5. A device according to any preceding claim, wherein the compressible member (4) is a circumferentially split ferrule.

6. A device according to Claim 5, wherein the circumferentially split ferrule comprises hardened steel segments with elastomeric inserts.

7. A device according to any preceding claim, wherein the body (1,2) comprises axially aligned separate body parts each threadedly engageable with a co-axial spring retaining member (3) housed within the body.

8. A device according to Claim 5 or Claim 6, wherein the body (1,2) contains an anti-extrusion ring (6) axially aligned with the circumferentially split ferrule (4), and a tapered ring (5) located between the anti-extrusion ring (6) and the circumferentially split ferrule (4).

9. A device according to any preceding claim, wherein the body (1,2) includes an annular shoulder (18) against which an end of the inserted pipe or bar may be located.

## Patentansprüche

1. Vorrichtung zum Einspannen der äußeren Wandoberfläche eines Rohres oder einer Stange, mit einem rohrförmigen Körper (1, 2), der wenigstens ein Ende hat, das zum Einführen eines Rohres oder einer Stange offen ist, einem Käfig (8) mit Kugeln (9) oder Rollen, die mit einem ersten konisch zulaufenden inneren Wandteil (11) des Körpers zusammenwirken, und einer elastischen Einrichtung (10), vorzugsweise einer Feder (10), zum Drücken des Käfigs (8) in eine axiale Richtung, um zu bewirken, dass die Kugeln (9) oder die Rollen die äußere Wand eines eingeführten Rohres oder einer eingeführten Stange einspannen; **gekennzeichnet durch** ein kompressibles Teil (4), das innerhalb des Körpers (1, 2) angeordnet ist und mit einem zweiten konisch zulaufenden inneren Wandteil (14) des Körpers oder eines koaxialen Federhalteteils (3), das in dem Gehäuse (1, 2) untergebracht ist, zusammenwirkt und relativ dazu beweglich ist, wenn erhöhter Fluiddruck innerhalb des Körpers vorhanden ist, um so auch die äußere Wand des eingeführten Rohres oder der eingeführten Stange einzuspannen.

2. Vorrichtung nach Anspruch 1, wobei das kompressible Teil (4) eine Kontaktoberfläche hat, die dafür ausgebildet ist, im Wesentlichen vollständigen umfangsmäßigen Kontakt mit der äußeren Wandoberfläche des eingeführten Rohres oder der eingeführten Stange herzustellen.

3. Vorrichtung nach Anspruch 1 oder 2, mit einem Dichtring (7), der dafür ausgebildet ist, eine Dichtung zwischen der inneren Wand des Körpers (1, 2) und der äußeren Wandoberfläche des eingeführten Rohres oder der eingeführten Stange zu bilden.

4. Vorrichtung nach einem der vorhergehenden Ansprüche, wobei der Käfig (8) und das kompressible Teil (4) zusammenwirkende Stirnflächen (20, 21) zur gleichzeitigen axialen Bewegung innerhalb des Körpers haben.

5. Vorrichtung nach einem der vorhergehenden Ansprüche, wobei das kompressible Teil (4) ein umfangsmäßig geteilter Spannring ist.

6. Vorrichtung nach Anspruch 5, wobei der umfangsmäßig geteilte Spannring gehärtete Stahlsegmente mit elastomeren Einsätzen aufweist.

7. Vorrichtung nach einem der vorhergehenden Ansprüche, wobei der Körper (1, 2) axial ausgerichtete separate Körperteile aufweist, die jeweils mit einem koaxialen Federhalteteil (3), das in dem Körper untergebracht ist, in Gewindeeingriff bringbar sind.

8. Vorrichtung nach Anspruch 5 oder 6, wobei der Körper (1, 2) einen Antiextrusionsring (6) enthält, der mit dem umfangsmäßig geteilten Spannring (4) axial ausgerichtet ist, und einen konisch zulaufenden Ring (5), der zwischen dem Antiextrusionsring (6) und dem umfangsmäßig geteilten Spannring (4) angeordnet ist.

9. Vorrichtung nach einem der vorhergehenden Ansprüche, wobei der Körper (1, 2) eine ringförmige Schulter (18) aufweist, an die sich ein Ende des eingeführten Rohres oder der eingeführten Stange anlegen kann.

## Revendications

1. Dispositif pour saisir la surface de paroi externe d'un tuyau ou barre comprenant un corps tubulaire (1, 2) ayant au moins une extrémité ouverte pour l'insertion d'un tuyau ou barre, une cage (8) avec des billes (9) ou roulements coopérant avec une première partie de paroi interne évasée (11) du corps, et des moyens résilients (10), de préférence un ressort (10), pour pousser la cage (8) dans une direction axiale pour amener les billes (9) ou roulements à saisir la paroi externe d'un tuyau ou barre inséré(e) ; **caractérisé par** un élément compressible (4) situé dans le corps (1, 2) et coopérant avec une seconde partie de paroi interne évasée (14) du corps ou d'un élément retenant un ressort coaxial (3) logé dans le corps (1, 2) et déplaçable par rapport à celui-ci lorsqu'une augmentation de la pression fluidique se produit dans le corps saisissant ainsi également la paroi externe du tuyau ou barre inséré(e).

2. Dispositif selon la revendication 1, dans lequel l'élément compressible (4) a une surface de contact adaptée à réaliser un contact sensiblement entièrement circonférentiel avec la surface de paroi externe du tuyau ou barre inséré(e).

3. Dispositif selon la revendication 1 ou 2, comprenant un anneau d'étanchéification (7) adapté à former une étanchéité entre la paroi interne du corps (1, 2) et la surface de paroi externe du tuyau ou barre inséré(e).

4. Dispositif selon l'une quelconque des revendications précédentes, dans lequel la cage (8) et l'élément compressible (4) ont des faces coopérantes respectives (20,21) pour un mouvement axial simultané dans le corps.

5. Dispositif selon l'une quelconque des revendications précédentes, dans lequel l'élément compressible (4) est une bague circonférenciellement fendue.

6. Dispositif selon la revendication 5, dans lequel la bague circonférenciellement fendue comprend des segments en acier trempé avec des inserts élastomériques.

7. Dispositif selon l'une quelconque des revendications précédentes, dans lequel le corps (1, 2) comprend des parties de corps séparées, alignées de manière axiale, chacune étant apte à venir en prise filetée avec un élément retenant un ressort coaxial (3) logé dans le corps.

8. Dispositif selon la revendication 5 ou 6, dans lequel le corps (1, 2) contient un anneau anti-extrusion (6) aligné de façon axiale avec la bague circonférenciellement fendue (4) et une douille évasée (5) située entre l'anneau anti-extrusion (6) et la bague circonférenciellement fendue (4).

9. Dispositif selon l'une quelconque des revendications précédentes, dans lequel le corps (1, 2) comprend un épaulement annulaire (18) contre lequel une extrémité du tuyau ou barre inséré(e) peut être située.
